## Europäisches Patentamt
## European Patent Office
## Office européen des brevets

(19)

(11) Numéro de publication: **0 241 390 B1**

(12)

# FASCICULE DE BREVET EUROPEEN

(45) Date de publication du fascicule du brevet:
19.07.89

(21) Numéro de dépôt: **87420088.4**

(22) Date de dépôt: **02.04.87**

(51) Int. Cl.⁴: **C11D 3/48, A01N 59/00**

(54) **Procédé de désinfection de textiles contaminés par des bactéries.**

(30) Priorité: **11.04.86 FR 8605409**

(43) Date de publication de la demande:
**14.10.87 Bulletin 87/42**

(45) Mention de la délivrance du brevet:
**19.07.89 Bulletin 89/29**

(84) Etats contractants désignés:
**BE CH DE ES FR IT LI NL**

(56) Documents cités:
**EP-A- 0 047 015**
**EP-A- 0 086 511**
**EP-A- 0 109 279**
**FR-A- 2 573 452**

(73) Titulaire: **ATOCHEM, 4 & 8, Cours Michelet La Défense 10, F-92800 Puteaux(FR)**

(72) Inventeur: **Dugenet, Yann, 28, rue de la Marne, F-78800 Houilles(FR)**
Inventeur: **Isoard, Pierre,, 136 cours Emile-Zola, F-69100 Villeurbanne(FR)**
Inventeur: **Kerleaux, Jean-Claude C.T.T.N./I.R.E.N., inst. de Recherche sur l'Entretien et le Nettoyage, Avenue Guy de Collongue F-69130 Eculiy(FR)**

II est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé de désinfection à effet bactéricide de textiles contaminés par des bactéries.

La présence de certaines bactéries sur les textiles étant à l'origine de risques pathogénes graves, une telle désinfection est d'un intérêt évident dans le domaine de l'hygiène, en particulier dans celui de l'hygiène domestique ou collective, par exemple en milieu hospitalier.

Si certaines bactéries comme le PSEUDOMONAS aeruginosa sont trés sensibles aux désinfectants usuels comme par exemple l'hypochlorite, d'autres sont d'une virulence telle que leur destruction peut justifier celle du textile-même qu'elles contaminent.

Dans le cas le plus général cependant, lorsque par exemple il y a contamination des textiles par des bactéries comme les bactéries non sporulées tels que le STREPTOCOCCUS foecalis, le STAPHYLOCOCCUS aureus ou l'ESCHERICHIA coli, il est recherché des traitements qui préservent les textiles initialement contaminés.

La justification économique de tels traitements doit cependant rester compatible avec un effet bactéricide suffisamment efficace, ce qui n'est plus le cas lorsque les textiles sont soumis à une action détergente à une température inférieure à environ 70°C.

C'est ce qui ressort par exemple de l'article de Joanne C. WIKSELL, Mary S. PICKETT et Paul A. HARTMANN dans Applied Microbiology, 25 n o 3, Mars 1973, pp. 431-435.

Une modification du traitement détergent s'impose alors, qui consiste à faire appel à un désinfectant chloré comme par exemple l'hypochlorite de sodium, ou des compsés organiques chlorés.

C'est par exemple ce que préconisent William G. WALTER et John B. SHILLINGER dans Applied Mi-crobiology, 29, n o 3, Mars 1975, pp. 368-373 ou Robert R. CHRISTIAN, Janet T. MANCHESTER et Mi-chael T. MELLORI dans Applied and Environmental Microbiology, 45, n o 2, Février 1983, pp. 591-597.

La désinfection en présence de chlore actif présente cependant comme inconvénients majeurs d'entraîner le risque de corrosion des installations de traitement, de nécessiter une neutra lisation subséquente et, dans le cas de l'hypochlorite, désinfectant le plus communément mis en oeuvre, de révéler irréversiblement sous forme de taches colorées, la chlorhexidine ou ses dérivés, de la famille des bis-di-guanides, autre classe de désinfectants trés utilisés en milieu hospitalier.

Le procédé selon l'invention ne présente pas les inconvénients des procédés connus et procure un effet bactéricide élevé à basse température sans intervention d'un désinfectant chloré.

Il consiste en une association d'un traitement de détergence et de l'action d'un agent de blachiment peroxydé, caractérisée en ce que, à la suite d'un traitement de détergence réalisé en l'asbsence d'agent de blanchiment peroxydé, l'action de l'agent de blanchiment peroxydé s'exerce sur le textile contaminé, en bain aqueux alcalin de pH compris entre 9 et 13, à une température comprise entre 40°C et 70°C, en présence d'une quantité de calcium non complexé solubilisé comprise entre 0,001 % et 1 % en poids du poids du bain et ayant pour source l'oxyde de calcium, l'hydroxyde de calcium ou un sel de calcium dont l'anion est inerte vis-à-vis de l'agent de blanchiment peroxydé et dont la constante de dissociation est supérieure à 0,01.

Par procédé selon l'invention caractérisé comme ci-dessus on entend un procédé dans laquel la détergence qui précède l'action de l'agent peroxydé est poursuivie ou non après que cette action ait eu lieu. Dans le premier cas la détergence peut être bien entendu parachevée mais aussi la désinfection trés au-delà d'une réduction d'au moins $10^5$ fois du nombre de bactéries dénombrables.

Un quantité de calcium non complexé solubilisé n'excédant pas environ 0,1 % est le plus souvent suffisante pour que soit assuré le résultat visé.

Le chlorure de calcium est l'exemple le plus courant de sel utilisable comme source de calcium dans l'invention.

L'agent de blanchiment peroxydé présent dans le bain est choisi par exemple parmi le peroxyde d'hydrogène, le perborate de sodium, le percarbonate de sodium, le peroxyhydrate d'urée.

La concentration en oxygène actif résultant de la présence de tels agents de blanchiment est généralement comprise entre 0,01 % et 0.05 % en poids par rapport au poids du bain.

Le bain peut contenir des agents complexants des ions métalliques, en particulier des ions des métaux alcalino-terreux en quantité telle que soit respectée la quantité de calcium non complexé solubilisé.

Le bain peut enfin n'être constitué que du mélange aqueux de l'agent alcalin, de l'agent de blanchiment peroxydé et du sel choisi pour être la source du calcium.

En pareil cas, le bain contient de préférence le calcium et l'agent alcalin dans le rapport qui correspondrait à la formation de $Ca(OH)_2$.

L'agent alcalin préféré est l'hydroxyde de sodium NaOH mais le produit source de calcium peut être cause, en totalité ou en partie, de l'alcalinité du bain lorsqu'il est choisi parmi l'oxyde de calcium ou l'hydroxyde de calcium.

La gamme de pH préférée est de 10,5 à 12,5.

La durée du traitement dépend largement des autres conditions adoptées pour effectuer cette opération. Elle est généralement faible, inférieure par exemple à 30 minutes et le plus souvent à 15 minutes.

En ce qui concerne la détergence, elle est réalisée de toute façon connue, avantageusement bien sûr à une température inférieure à 70°C, le plus généralement entre 30°C et 70°C, en bain alcalin, en présence, en nature et en quantité, des produits détergents et des autres ingrédients usuellement employés comme les alkylbenzènesulfonates et alkylarylbenzènesulfonates, les alcools gras oxyéthylés, le tripolyphosphate de sodium ou ses produits de substitution, les agents antiredéposition comme la carboxyméthylcellulose, des sels minéraux comme le silicate de sodium ou le silicate de magnésium, le sulfate de sodium, des agents complexants, des produits azurants, des parfums etc....

Le procédé de l'invention s'applique indifféremment à un textile soit naturel, comme le coton, soit à base de fibres artificielles, comme le polyester-coton, qui demande ou non à être blanchi et/ou lavé.

Les exemples ci-dessous, donnés à titre indicatif mais non limitatif permettent de juger de l'intérêt de l'invention.

Pour ces exemples, deux textiles différents représentatifs de ceux utilisés dans la pratique courante : coton 100 % et polyester 65 % - coton 35 %, sous forme de draps désapprêtés stériles, ont servi à la préparation d'échantillons circulaires de 50 mm de diamètre qui ont été chacun contaminés expérimentalement par dépôt en leur centre de 500 microlitres d'une suspension bactérienne d'ESCHERICHIA coli, souche de référence 54127 de la Collection Nationale de Cultures de Microorganismes CNCM de l'Institut Pasteur à Paris, correspondant à la référence 10536 de l'American Type Culture Collection ATCC, ou bien d'une suspension bactérienne de STAPHYLOCOCCUS aureus, souche de référence Oxford CNCM 53154 correspondant à la référence ATCC 9144.

L'inoculum servant à la contamination provient d'une culture en milieu liquide du germe d'essai durant 18 heures à 30°C.

les suspensions bactériennes sont numérées par étalement sur gélose nutritive selon le processus décrit dans la norme française AFNOR NF T 72-190, Mars 1981.

Les valeurs des numérations bactériennes dans ce cas comme dans tout ce qui suit sont converties en logarithmes décimaux et sont exprimées sous cette forme.

Les échantillons correspondant aux essais avec l'ESCHERICHIA coli sont désignés dans ce qui par la lettre E, ceux correspondant aux essais avec le STAPHYLOCOCCUS aureus par la lettre S.

Après contamination, E et S sont portés 1 heure à 37°C en étuve ventilée avant d'être stérilement incorporés par épinglage, chacun de leur côté, à une charge de linge blanc de 15 kg et d'être soumis avec cette charge, respectivement et séparemment, au procédé de l'invention ou a un procédé effectué à titre comparatif.

La désinfection terminée, E et S font l'objet d'un prélèvement stérile dans la charge et sont traités pour en extraire les bactéries encore vivaces le cas échéant et procéder à la numération bactérienne des liquides d'extraction correspondants $E_1$ et $S_1$ selon un processus analogue à celui décrit dans la norme française AFNOR déjà citée.

Les échantillons $E_e$ et $S_e$ résultant du traitement d'extraction des bactéries sont eux-mêmes soumis à une numération bactérienne en procédant comme pour les membranes filtrantes dans la norme française AFNOR déjà citée, par décompte des colonies apparues le cas échéant après 48 heures d'incubation à 30°C.

EXEMPLE 1 à 12

Ils illustrent l'invention lorsque le traitement associé à la détergence est réalisé intermédiairement à deux traitements détergents.

L'appareillage utilisé est une laveuse-essoreuse du type A2 S15 de la marque DUBIX ®.

Après mouillage de la charge de 15 kg de linge incluant l'échantillon contaminé E ou S, le premier traitement détergent est effectué à 40°C durant 4 minutes au moyen d'une composition lessivielle exempte d'agent de blanchiment peroxydé, ORIX MAJOR - Saint-Marc ®, employée à raison de 10 g/kg de linge sec, le rapport pondéral bain/charge de linge sec étant de 3/1.

Après essorage durant 1 minute, opération d'ailleurs facultative pourvu que les conditions de pH soient respectées dans le traitement associé, celui-ci est réalisé avec un rapport pondéral bain/charge de linge sec de 5/1, à 60°C durant 9 minutes, en présence de 39,5 g de peroxyde d'hydrogène, de 1,5 g de calcium non complexé introduit sous forme de chlorure dihydraté $CaCl_2, 2H_2O$, et de 3 g d'hydroxyde de sodium introduit sous forme d'une solution commerciale.

Un second traitement détergent est effectué directement après le traitement ci-dessus, à 60°C durant 6 minutes dans les conditions de rapport de bain, de nature et de quantité de produit lessiviel identique à celles citées pour le premier traitement détergent.

Après rinçage et essorage final ordinaire, il est procédé au prélèvement de l'échantillon E ou S et aux numérations comme décrit plus haut.

Les résultats de désinfection font l'objet du tableau I ci-après :

Tableau I – exemples 1 à 12

Traitement associé à la détergence réalisé intermédiairement à deux traitements détergents

| Exemple n° | E Nombre de bactéries [1] | | | | | S Nombre de bactéries [1] | | | | |
|---|---|---|---|---|---|---|---|---|---|---|
| | Avant | Après coton | | Après polyester-coton | | Avant | Après coton | | Après polyester-coton | |
| | | $E_1$ | $E_0$ | $E_1$ | $E_0$ | | $S_1$ | $S_0$ | $S_1$ | $S_0$ |
| 1 | 8,0 | 0 | 0 | | | | | | | |
| 2 | 8,9 | 0 | 0 | | | | | | | |
| 3 | 8,5 | 0 | 0 | | | | | | | |
| 4 | 8 | | | 0 | 0 | | | | | |
| 5 | 8,9 | | | 0 | 0 | | | | | |
| 6 | 8,5 | | | 0 | 0 | | | | | |
| 7 | | | | | | 7,4 | 0 | 0 | | |
| 8 | | | | | | 8,5 | 0 | 0 | | |
| 9 | | | | | | 8,4 | 0 | 0 | | |
| 10 | | | | | | 7,4 | | | 0 | 0 |
| 11 | | | | | | 8,5 | | | 0 | 0 |
| 12 | | | | | | 8,4 | | | 0 | 0 |

(1) Numérations bactériennes exprimées, comme signalé plus haut, par leurs logrithmes décimaux.

## EXEMPLE 13

Il illustre un procédé donné à titre comparatif qui met en oeuvre un désinfectant chloré, l'hypochlorite de sodium.

Dans la même machine que pour les exemples précédents, la charge de linge est soumise après mouillage à deux traitements détergents successifs pratiqués avec un rapport pondéral bain/charge de linge sec égal à 3, le premier durant 4 minutes à 40°C en présence de 10 g/kg de linge sec de la composition lessivielle mise en jeu dans les autres exemples, le second durant 6 minutes à 60°C en présence de cette même composition lessivielle employée encore à raison de 10 g/kg de linge sec.

Après rinçage, un traitement avec un rapport pondéral bain/charge de linge sec égal à 5 est pratiqué durant 7 minutes à 30°C en présence d'hypochlorite de sodium mis en jeu à raison de 10 cm³ de solution d'hypochlorite de sodium de 48° chlormétriques par kilogramme de linge sec, et est suivi d'une neutralisation du milieu par le bisulfite de sodium avant rinçage et essorage final.

Avec des échantillons de coton ou de polyester-coton de type E (ESCHERICHIA coli), le degré de désinfection atteint est alors aléatoire, la désinfection pouvant être parfois complète, parfois nettement insuffisante comparée à l'absence systématique de microorganisme constatée dans tous les cas en opérant selon le procédé de l'invention.

Une moyenne de trois essais conduit par exmple à une numération proche de 1 dans le cas du coton et de 0,5 dans le cas du polyester-coton à partir d'une numération de 8,6.

Avec des échantillons de coton du type S (STAPHYLOCOCCUS aureus) la désinfection est encore beaucoup plus faible comme le montre le tableau II ci-dessous.

Tableau II – échantillons coton de type S

| Nombre de bactéries | | |
|---|---|---|
| avant | après | |
| | $S_1$ | $S_\phi$ |
| 8,3 | 0 | 4 |
| 8,1 | 2,6 | 4,6 |
| 8,1 | 4,3 | 3,8 |

## Revendications

1. Procédé de désinfection de textiles contaminés par des bactéries dans lequel sont associés un traitement de détergence et l'action d'un agent de blanchiment peroxydé, caractérisé en ce que à la suite d'un traitement de détergence réalisé en l'absence d'agent de blanchiment peroxydé, l'action de l'agent de blanchiment peroxydé s'exerce sur le textile contaminé, en bain aqueux alcalin de pH compris entre 9 et 13, à une température comprise entre 40°C et 70°C, en présence d'une quantité de calcium non complexé solubilisé comprise entre 0,001 % et 1 % en poids du poids du bain et ayant pour source l'oxyde de calcium, l'hydroxyde de calcium ou un sel de calcium dont l'anion est inerte vis-à-vis de l'agent de blanchiment peroxydé et dont la constante de dissociation est supérieure à 0,01.

2. Procédé selon la revendication 1, caractérisé en ce que la quantité de calcium non complexé solubilisé est inférieure à 0,1 %.

3. Procédé selon l'une des revendications 1 et 2, caractérisé en ce que la source de calcium est le chlorure de calcium.

4. Procédé selon l'une des revendications 1 à 3, caractérisé en ce que l'agent de blanchiment peroxydé est choisi parmi le peroxyde d'hydrogène, le perborate de sodium, le percarbonate de sodium, le peroxyhydrate d'urée.

5. Procédé selon la revendication 4, caractérisé en ce que la quantité d'agent de blanchiment peroxydé correspond à une concentration en oxygène actif comprise entre 0,01 % et 0,05 % en poids.

6. Procédé selon l'une des revendications 1 à 5, caractérisé en ce que le bain dans lequel agit l'agent de blanchiment peroxydé renferme des agents complexants des métaux alcalino-terreux.

7. Procédé selon l'une des revendications 1 à 6, caractérisé en ce que le bain lequel agit l'agent de blanchiment peroxydé a un pH compris entre 10,5 et 12,5.

8. Procédé selon l'une des revendications 1 à 7, caractérisé en ce que l'action de l'agent de blanchiment peroxydé s'exerce sur le tissu contaminé pendant une durée n'excédant pas 15 minutes à la température choisie.

9. Procédé selon l'une des revendications 1 à 8, caractérisé en ce que la détergence est réalisée à une température au moins égale à 30°C et au plus égale à 70°C.

## Patentansprüche

1. Verfahren zur Desinfektion von mit Bakterien kontaminierten Textilien, bei dem eine Behandlung in einem Waschvorgang und die Einwirkung eines peroxidierten Bleichmittels in Gegenwart einer Calciumverbindung verknüpft werden, dadurch gekennzeichnet, daß es mit einer Behandlung in einem Waschvorgang beginnt, die in Abwesenheit des peroxidierten Bleichmittels vorgenommen wird, auf die die Einwirkung des peroxidierten Bleichmittels in einem wäßrigen alkalischen Bad mit einem pH-Wert zwischen 9 und 13 bei einer Temperatur zwischen 40°C und 70°C folgt, in Gegenwart einer Menge von zwischen 0,001% und 1 Gew.-% nicht komplexiertem gelöstem Calcium, bezogen auf das Gewicht des Bads, wobei als Quelle für das Calcium Calciumoxid, Calciumhydroxid oder ein Calciumsalz dient, dessen Anion gegenüber dem peroxidierten Bleichmittel inert ist und dessen Dissoziationskonstante größer ist als 0,01.

2. Verfahren nach Anspruch 1, dadurch gekennzeichnet, daß die Menge des nicht komplexierten gelösten Calciums geringer als 0,1% ist.

3. Verfahren nach einem der Ansprüche 1 oder 2, dadurch gekennzeichnet, daß als Calciumquelle Calciumchlorid dient.

4. Verfahren nach einem der Ansprüche 1 bis 3, dadurch gekennzeichnet, daß das peroxidierte Bleichmittel ausgewählt wird aus Wasserstoffperoxid, Natriumperborat, Natriumperoxycarbonat und Harnstoffperoxidhydrat.

5. Verfahren nach Anspruch 4, dadurch gekennzeichnet, daß die Menge des peroxidierten Bleichmittels einer Konzentration an aktivem Sauerstoff von zwischen 0,01 und 0,05 Gewichtsprozent entspricht.

6. Verfahren nach einem der Ansprüche 1 bis 5, dadurch gekennzeichnet, daß das Bad in dem das peroxidierte Bleichmittel wirkt, Komplexierungsmittel für Erdalkalimetalle enthält.

7. Verfahren nach einem der Ansprüche 1 bis 6, dadurch gekennzeichnet, daß das Bad in dem das

EP 0 241 390 B1

peroxidierte Bleichmittel wirkt, einen pH-Wert zwischen 10,5 und 12,5 aufweist.

8. Verfahren nach einem der Ansprüche 1 bis 7, dadurch gekennzeichnet, daß die Einwirkung des peroxidierten Bleichmittels auf das kontaminierte Gewebe für eine Dauer erfolgt, die 15 Minuten bei der gewählten Temperatur nicht überschreitet.

9. Verfahren nach einem der Ansprüche 1 bis 8, dadurch gekennzeichnet, daß der Waschvorgang bei einer Temperatur von wenigstens 30°C und höchstens 70°C durchgeführt wird.

**Claims**

1. A disinfection process for textiles contaminated with bacteria, in which a detergent treatment and the action of a peroxide-containing bleaching agent in the presence of a calcium compound are associated, characterized in that the process starts with a detergent treatment performed in the absence of the peroxide-containing bleaching agent, which treatment is then followed by the action of the peroxide-containing bleaching agent in an aqueous alkaline bath having a pH between 9 and 13, at a temperature between 40°C and 70°C, in the presence of dissolved noncomplexed calcium in an amount of from 0.001% to 1% by weight with regard to the weight of the bath, and derived from calcium oxide, calcium hydroxide, or a calcium salt the anion of which is inert with respect to the peroxide-containing bleaching agent, and the dissociation constant of which is greater than 0.01.

2. A process according to claim 1, characterized in that the quantity of dissolved non-complexed calcium is less than 0.1%.

3. A process according to any one of claims 1 and 2, characterized in that the source of calcium is calcium chloride.

4. A process according to any one of claims 1 to 3, characterized in that the peroxide-containing bleaching agent is selected from hydrogen peroxide, sodium perborate, sodium percarbonate and urea peroxyhydrate.

5. A process according to claim 4, characterized in that the quantity of peroxide-containing bleaching agent corresponds to an active oxygen concentration between 0.01% and 0.05% by weight.

6. A process according to any one of claims 1 to 5, characterized in that the bath in which the peroxide-containing bleaching agent acts contains agents for complexing alkaline earth metals.

7. A process according to any one of claims 1 to 6, characterized in that the bath in which the peroxide-containing bleaching agent acts has a pH between 10.5 and 12.5.

8. A process according to any one of claims 1 to 7, characterized in that the peroxide-containing bleaching agent acts on the contaminated cloth for a period not exceeding 15 minutes at the selected temperature.

9. A process according to any one of claims 1 to 8, characterized in that the detergent treatment is performed at a temperature of at least 30°C and at most 70°C.